(19)

Europäisches
Patentamt

European
Patent Office

Office européen
des brevets

(11) **EP 4 749 914 A1**

(12) **EUROPEAN PATENT APPLICATION**

(43) Date of publication:
**27.05.2026 Bulletin 2026/22**

(51) International Patent Classification (IPC):
**H02P 29/60** $^{(2016.01)}$  **G05B 23/02** $^{(2006.01)}$

(21) Application number: **24306969.7**

(22) Date of filing: **25.11.2024**

(52) Cooperative Patent Classification (CPC):
**G05B 23/024; G05B 23/0243; G05B 23/0283; H02P 29/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SCHNEIDER ELECTRIC INDUSTRIES SAS**
**92500 Rueil-Malmaison (FR)**

(72) Inventors:
• **BLONDEL, Charles**
  **38000 GRENOBLE (FR)**
• **DOGAN, Leyla**
  **59800 LILLE (FR)**

(74) Representative: **Plasseraud IP**
**104 Rue de Richelieu**
**CS92104**
**75080 Paris Cedex 02 (FR)**

(54) **PREDICTIVE MAINTENANCE METHOD AND SYSTEM OF MECHANICAL DEVICES BASED ON TEMPERATURE MONITORING USING DIGITAL TWINS**

(57)     A method for predictive maintenance of a device based on temperature monitoring involves creating (P1) a digital twin of the device. The method includes determining (S1) a virtual ambient temperature, VAT, by recording ambient and device temperatures when the device is not in operation, creating a model to reproduce the variation of device temperature based on ambient temperature, and calculating (S2) a relative device temperature, RDT. The method further includes calculating (S3) an additional temperature variation, DTVA, due to the device's operation, recording operational data, and training (S4) the digital twin with this data. The digital twin predicts (S5) temperature increases based on operational data, and the method predicts device temperature by adding VAT to the predicted increase. Abnormal temperatures are detected (S6) by comparing predicted and actual temperatures, identifying deviations that exceed a predefined threshold. The system includes sensors, a data acquisition unit, a processing unit, and a communication module for transmitting alerts.

FIG. 1

## Description

### Technical Field

This disclosure relates to predictive maintenance systems, specifically for temperature monitoring of mechanical devices using digital twins.

### Background Art

Predictive maintenance systems aim to monitor and predict the operational status of mechanical devices to prevent failures. These systems often rely on temperature monitoring to assess the condition of devices such as motors, reducers, and bearings. Temperature variations can indicate potential issues, making accurate temperature monitoring important for effective maintenance.

In the realm of predictive maintenance, digital twins have emerged as a powerful tool for monitoring and predicting the operational status of mechanical devices. A digital twin is a virtual representation of a physical device, created using data collected from sensors and other monitoring equipment. This virtual model allows for real-time simulation and analysis of the device's performance under various operating conditions. Prior art in this field has demonstrated the effectiveness of digital twins in predicting failures and optimizing maintenance schedules.

More precisely, the creation of a robust and accurate digital twin relies on both a data collection phase and a training phase. During the data collection phase, comprehensive data from the physical device are gathered, including operational parameters (e.g., rotation speed, torque) and environmental factors (e.g., ambient temperature) using sensors and data acquisition systems. A mathematical model or algorithm is then developed to simulate the device's behavior based on the collected data. This model can range from simple linear equations to complex machine learning algorithms. During the training phase, the model is trained using historical operational data. Techniques such as regression analysis, neural networks, or support vector machines are commonly used to optimize the model parameters. The digital twin can then be used for real-time simulation and analysis of the device's performance, enabling proactive maintenance and optimization.

As far as temperature monitoring is concerned, a digital twin allows to predict the normal temperature of devices such as motors, reducers, and bearings as a function of its operating parameters (e.g., rotation speed, torque, load). Of course, one of the influential parameters in the temperature level of a device is the ambient temperature.

However, existing methods often struggle with accurately accounting for the influence of external factors, such as ambient temperature, on the device's performance. Indeed, in order to obtain a robust, accurate and high-performance model, the data collection phase must record the temperature evolution of the device at all its operating points. For example, in the case of an electric motor, the full current, speed or torque ranges must be covered to determine the temperature evolution at all operating points. The same applies to the widest possible ambient temperature range. Although it is quite easy to browse operating points such as current, torque or speed by acquiring and recording a lot of operating data, it is much more complicated to browse the whole ambient temperature range in a short time (e.g., a few days), since it can vary significantly with seasonal changes. When data is collected during summertime, the model cannot be trained with operating points corresponding to very low ambient temperatures, such as the ones that can be encountered during wintertime, and reciprocally.

Hence, these methods typically require extensive data collection over prolonged periods to cover the full range of ambient temperature operating conditions, making them economically impractical and time-consuming.

### Summary

This disclosure improves the situation.

It is proposed a method for predictive maintenance of a device based on temperature monitoring, the method comprising:

    a. creating a digital twin of the device by:

        i. determining a virtual ambient temperature, VAT, comprising:

            1. recording a set of ambient temperatures and a corresponding set of device temperatures when the device is not in operation,

            2. based on said sets of recorded temperatures, creating a model that reproduces the variation of the device temperature based solely on the ambient temperature, said model outputting the virtual ambient temperature, VAT,

ii. calculating a relative device temperature, RDT, by subtracting the virtual ambient temperature, VAT, from a measured temperature of the device,

iii. calculating an additional temperature variation, DTVA, due to the device's operation by comparing the relative device temperature, RDT, to a theoretical neutral temperature variation, DTVN, which is determined by applying the model of the virtual ambient temperature to a previous relative device temperature,

iv. recording operational data of the device, and training said created digital twin with said recorded data,

b. using the created digital twin to predict the temperature increase due to the device's operation, APT-DT, based on at least some of its operational data, and, based on the predicted temperature increase, APT_DT, calculating a predicted relative temperature of the device, RPT,

c. predicting the absolute temperature of the device, Abs_PT, by adding the virtual ambient temperature, VAT, to the predicted relative temperature, RPT,

d. detecting an abnormal temperature by comparing the predicted absolute temperature to an actual measured temperature of the device and identifying a deviation that exceeds a predefined threshold.

In another aspect, it is proposed a system for predictive maintenance of a device based on temperature monitoring, the system comprising:

a. at least two temperature sensors respectively configured to measure an ambient temperature and a temperature of the device;

b. at least one sensor configured to measure operational data of the device;

c. a data acquisition unit configured to record a set of ambient temperatures and a corresponding set of device temperatures when the device is not in operation and to record operational data of the device when the device is in operation;

d. a processing unit configured to:

i. create a model that reproduces the variation of the device temperature based solely on the ambient temperature, said model being fed with the data recorded by the data acquisition unit and outputting a virtual ambient temperature, VAT;

ii. calculate a relative device temperature, RDT, by subtracting the virtual ambient temperature, VAT, from a temperature of the device measured by said at least one temperature sensor;

iii. calculate an additional temperature variation, DTVA, due to the device's operation by comparing the relative device temperature, RDT, to a theoretical neutral temperature variation, DTVN, which is determined by applying the model of the virtual ambient temperature to a previous relative device temperature;

iv. train a digital twin of the device with said recorded operational data of the device and said calculated DTVA;

v. use the trained digital twin to predict the temperature increase due to the device's operation, APT_DT, based on at least some of its measured operational data and, based on the predicted temperature increase, APT_DT, calculate a predicted relative temperature of the device, RPT;

vi. predict the absolute temperature of the device, Abs_PT, by adding the virtual ambient temperature, VAT, to the predicted relative temperature, RPT;

vii. detect an abnormal temperature by comparing the predicted absolute temperature to an actual measured temperature of the device and identifying a deviation that exceeds a predefined threshold;

e. a communication module configured to transmit the detected abnormal temperature and associated data to a remote monitoring system or alert the user

In another aspect, it is proposed a computer software comprising instructions to implement at least a part of a method as defined here when the software is executed by a processor. In another aspect, it is proposed a computer-readable non-transient recording medium on which a software is registered to implement the method as defined here when the software is executed by a processor.

The following features, can be optionally implemented, separately or in combination one with the others:
The model that reproduces the variation of the device temperature based solely on the ambient temperature is a first-order transfer function.

The first-order transfer function takes account of an offset due to temperature sensors used for recording said sets of ambient and device temperatures.

Parameters of the first-order transfer function are determined using a method belonging to the group comprising:

- a method of Least Squares;
- a Maximum Likelihood Estimation method;
- a Gradient Descent algorithm;
- a genetic algorithm;
- an Expectation-Maximization algorithm.

The set of ambient temperatures recorded for creating said digital twin spans a smaller range of ambient temperatures than the full temperature range in which the device may operate.

The operational data of the device includes at least one of rotation speed, torque, current, pressure, or load.

The virtual ambient temperature (VAT) is updated in real-time based on current ambient temperature measurements.

The digital twin is trained using machine learning algorithms to improve the accuracy of temperature predictions.

The method further comprises generating alerts or notifications when an abnormal temperature is detected, and transmitting these alerts to a remote monitoring system or user interface.

The method further comprises providing a user interface for visualizing the device's temperature data and predictive maintenance insights.

The digital twin is periodically updated with new operational data to improve the accuracy of temperature predictions over time.

**Brief Description of Drawings**

Other features, details and advantages will be shown in the following detailed description and on the figures, on which:

**Fig. 1**

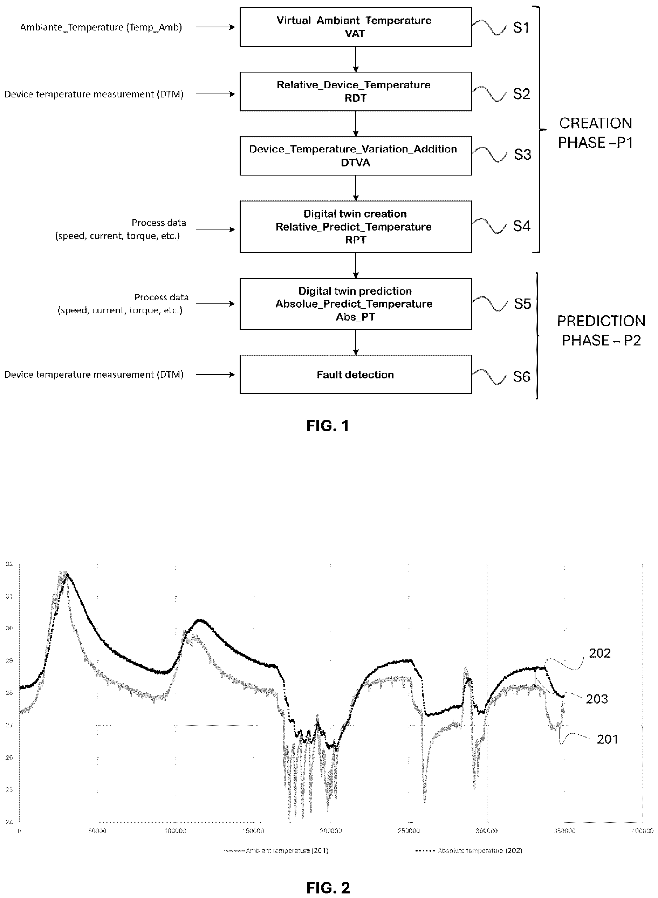

[Fig. 1] is a flow chart diagram illustrating the sequence of steps in the predictive maintenance method for temperature monitoring using digital twins according to an embodiment.

**Fig. 2**
[Fig. 2] shows a graph depicting a set of ambient temperatures and a corresponding set of device temperature measurement (DTM) when the device is not in operation as recorded according to an embodiment.

**Fig. 3**

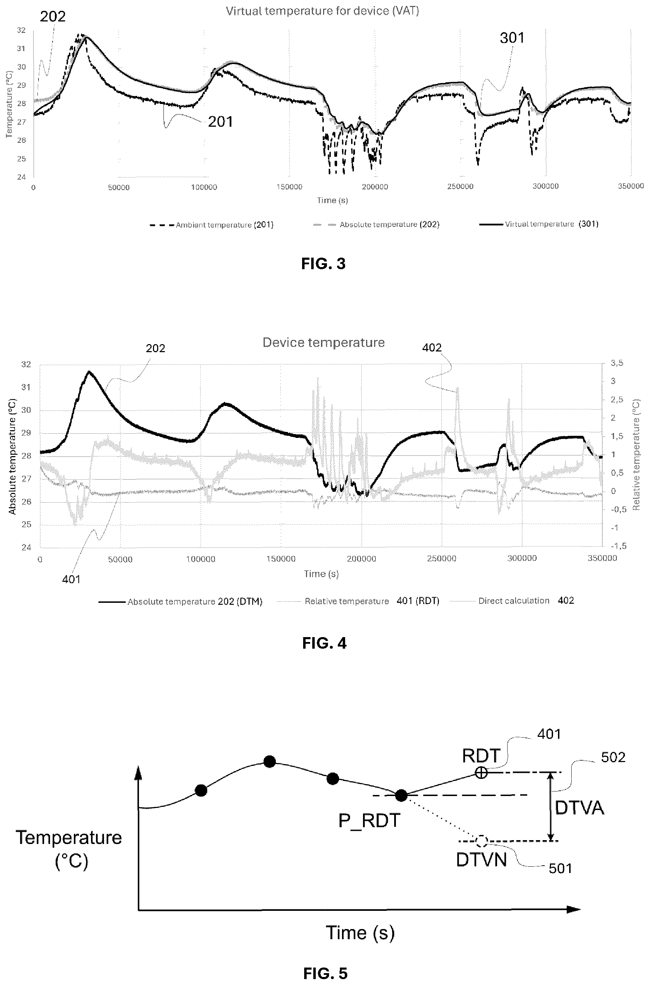

[Fig. 3] shows a graph depicting the ambient temperature, the device temperature (DTM), and the virtual ambient temperature (VAT) over time according to an embodiment.

**Fig. 4**
[Fig. 4] shows a graph depicting the relative device temperature (RDT) overtime as calculated using the Virtual Ambient Temperature of Fig. 3 according to an embodiment.

**Fig. 5**
[Fig. 5] illustrates the calculation of additional temperature variation (DTVA) by comparing relative device temperature (RDT) to theoretical neutral temperature variation (DTVN) according to an embodiment.

**Fig. 6**

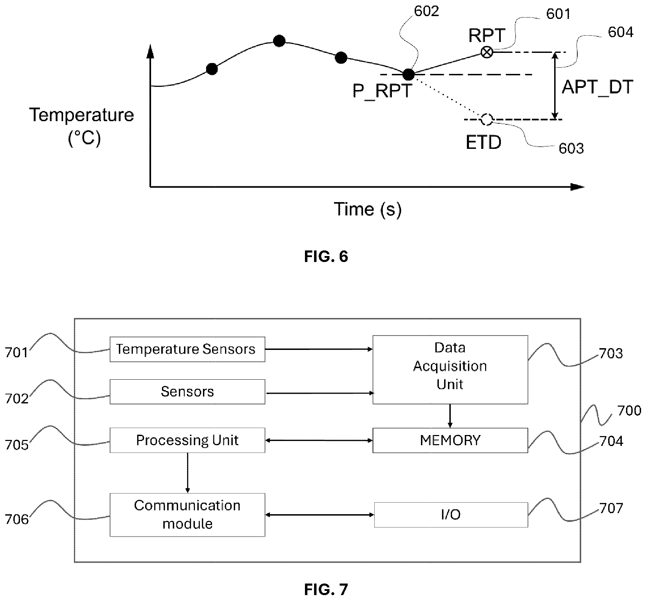

[Fig. 6] shows a schematic diagram illustrating the calculation of the predicted relative temperature (RPT) of a device using the expected temperature dissipation (ETD) and additional predicted temperature (APT_DT) according to an embodiment.

**Fig. 7**

[Fig. 7] depicts a schematic block diagram illustrating a system for predictive maintenance based on temperature monitoring according to an embodiment.

The same reference number represents the same element or the same type of element on all drawings.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code and the like represent various processes which may be substantially represented in computer readable medium and so executed by a computer or processor, whether or not such computer or processor is explicitly shown.

**Description of Embodiments**

The figures and the following description illustrate specific exemplary embodiments of the disclosure. It will thus be appreciated that those skilled in the art will be able to devise various arrangements that, although not explicitly described or shown herein, embody the principles of the disclosure and are included within its scope. Furthermore, any examples described herein are intended to aid in understanding the principles of the disclosure and are to be construed as being without limitation to such specifically recited examples and conditions. As a result, the disclosure is not limited to the specific embodiments or examples described below, but by the claims and their equivalents.

The disclosure involves a predictive maintenance method for monitoring the temperature of devices such as motors, reducers, and bearings. A mechanical device is a machine or tool that uses mechanical power to perform a specific function or task. It typically consists of various components such as gears, levers, pulleys, and motors that work together to convert energy into mechanical motion, enabling the device to carry out its intended operation. Examples of mechanical devices include motors, reducers, and bearings, which are often monitored for temperature variations to ensure proper functioning and prevent failures. More generally, the disclosure applies to any mechanical device, which operation involves an increase in its temperature, which must be monitored to detect any failure or any potential defect. The method uses a digital twin to predict the normal temperature levels of a device based on its operational parameters (e.g., rotation speed, torque) and ambient temperature.

Key challenges include the difficulty of covering the full range of ambient temperatures during the learning phase, which can be economically impractical. The solution involves eliminating the effect of ambient temperature on the device by working with relative temperature rather than absolute temperature. It allows for effective predictive maintenance by accurately monitoring and predicting temperature variations, thus identifying potential anomalies and preventing device failures.

It is now referred to FIG. 1. FIG. 1 shows a flowchart illustrating a method for predictive maintenance of a device based on temperature monitoring using digital twins, according to an embodiment. The method involves a first phase P1 for creating a digital twin and a second phase P2 for using the created digital twin to predict a device temperature and detect possible abnormal temperatures. The first phase P1 involves several steps, including determining a virtual ambient temperature (step S1), calculating a relative device temperature (step S2), calculating an additional temperature variation (step S3) and creating a digital twin (step S4). The second phase P2 involves several steps, including predicting the temperature using the digital twin (step S5), and detecting faults based on temperature deviations (step S6).

These steps will be described in greater detail in relation to figures 2 to 6.

Step S1 involves recording a set of ambient temperatures (Temp_Amb) and a corresponding set of device temperatures when the device is not in operation. Indeed, the device must not be in operation so that its temperature is only affected by the ambient temperature. Based on these recorded temperatures, a model is created that reproduces the variation of the device temperature based solely on the ambient temperature. The model outputs the virtual ambient temperature (VAT), which is determined at the end of step S1.

FIG. 2 shows a graph depicting the ambient temperature (curve 201) and the measured device temperature (DTM) (curve 202) with an offset 203, as recorded during step S1. The 201 curve represents the actual measured ambient temperature overtime, while the 202 curve represents the device temperature measurement. The DTM curve (curve 202) follows the general trend of the ambient temperature (curve 201) but with a smoother and slightly delayed response, reflecting the device's slower reaction to changes in ambient temperature, due to the thermal inertia of the device. The difference between the two curves corresponds to an offset, which is indicated by arrow 203, and which is induced by the temperature sensors used to sense and record the ambient and device temperatures.

As may be observed in FIG. 2, the set of ambient temperatures recorded for creating the digital twin spans a smaller range of ambient temperatures than the full temperature range in which the device may operate, thus reducing the time and resources required for the data collection phase, making the process more economically practical and less time-consuming. By focusing on a smaller range of ambient temperatures, the method can still create an accurate and robust digital twin without the need for extensive data collection over prolonged periods. Indeed, the model of thermal inertia of the device, once created over a small range of temperatures, can be simply expanded over the full temperature range in which the device may operate.

Once the data of FIG. 2 are recorded, a model is created, which reproduces the variation of the device temperature based solely on the ambient temperature. According to an embodiment, this model takes the form of a first-order transfer function.

The use of such a first-order transfer function provides a simplified yet effective approach to account for the thermal inertia of the device. This model allows for an accurate representation of the device's temperature response to changes in ambient temperature, which is crucial for creating a reliable digital twin. It may be modeled using the following formula:

[Math. 1]

$$VAT = ((Temp_{Amb} + Offset) \times B) + (P_{VAT} \times A)$$

where:

- $Temp_{Amb}$ is the ambient temperature.

- *Offset* is a correction factor to account for any measurement discrepancies between the ambient and device temperature sensors.

- $P_{VAT}$ is the previous virtual ambient temperature.

- *A* and *B* are parameters of the first-order transfer function that are used to adjust the model to accurately reflect the thermal behavior of the device.

Specifically:

- *A* represents the weighting factor applied to the previous virtual ambient temperature ($P_{VAT}$), which accounts for the thermal inertia of the device. For example, it is calculated as $A = \frac{Filt}{Filt+Cycle\_Time}$.

- *B* represents the gain factor applied to the sum of the ambient temperature ($Temp_{Amb}$) and the offset, which adjusts the influence of the current ambient temperature on the virtual ambient temperature. For example, it is calculated as $B = \frac{1}{1+(\frac{Filt}{Cycle\_Time})}$.

Here:

- *Filt* is a parameter that represents the filtering effect, which helps to smooth out the temperature variations and account for the thermal inertia of the device.

- *Cycle_Time* is the time interval over which the temperature measurements are taken and the model is updated.

These parameters are crucial for fine-tuning the model to ensure that the virtual ambient temperature accurately represents the device's response to changes in ambient temperature, considering its thermal inertia. Notably, by incorporating an offset into the first-order transfer function, the method compensates for any discrepancies or biases introduced by the temperature sensors used to record the ambient and device temperatures. This correction ensures that the virtual ambient temperature (VAT) accurately reflects the true ambient temperature, leading to a more precise calculation of the relative device temperature (RDT) at step S2.

The above parameters of the first-order transfer function may be determined using any method and may even be determined empirically. However, by determining the parameters of the first-order transfer function using advanced optimization methods such as Least Squares, Maximum Likelihood Estimation, Gradient Descent, genetic algorithms, or Expectation-Maximization algorithms, the method ensures that the model accurately reflects the thermal behavior of the device. These optimization techniques allow for precise calibration of the model parameters, leading to a more accurate representation of the device's temperature response to changes in ambient temperature.

FIG. 3 illustrates the temperature profiles overtime for a device, showing three distinct curves: the ambient temperature 201, the device temperature (DTM) 202, and the virtual ambient temperature (VAT) 301. The x-axis represents time in seconds, while the y-axis represents temperature in degrees Celsius.

Curve 201 represents the ambient temperature, which fluctuates over time. Curve 202 represents the actual measured temperature of the device (DTM for Device Temperature Measurement), which also varies but with a smoother and slightly delayed response compared to the ambient temperature due to the device's thermal inertia. Curve 301 represents the virtual ambient temperature (VAT), which is calculated to account for the thermal inertia of the device and closely follows the trend of the device temperature when the device is not in operation.

To create the VAT (curve 301) of FIG. 3, specific parameters are used in the first-order transfer function model:

- *Offset* = 0.7

- *Filt* = 6500

- *Cycle_Time*=60.

By incorporating these parameters, the virtual ambient temperature (curve 301) accurately represents the device's response to changes in ambient temperature, considering its thermal inertia, when the device is not in operation.

In alternate embodiments, the model that reproduces the variation of the device temperature based solely on the ambient temperature may take different forms other than a first-order transfer function. These alternate embodiments can include more complex models to account for various factors influencing the device's thermal behavior.

For example, a second-order transfer function can be used to model the device's temperature response with greater accuracy by considering both the primary and secondary effects of thermal inertia. This model can capture more complex dynamics of the device's temperature changes in response to ambient temperature variations.

In another embodiment, a state-space model can represent the device's thermal behavior using a set of differential equations. This approach allows for a more comprehensive representation of the system's dynamics, including multiple state variables and their interactions.

In yet another embodiment, a neural network model can be trained using historical temperature data to predict the device's temperature response to ambient temperature changes. This data-driven approach can capture complex, non-linear relationships between the ambient temperature and the device's temperature.

These alternate embodiments can be selected based on the specific requirements of the application, the complexity of the device's thermal behavior, and the available computational resources. Each model offers different advantages in terms of accuracy, computational efficiency, and robustness to uncertainties.

By determining the virtual ambient temperature (VAT) at step S1, the method can effectively isolate the temperature variations caused by the device's operation from those caused by changes in ambient temperature, leading to more accurate temperature monitoring and predictive maintenance.

Referring back to FIG. 1, at step S2, the method calculates a relative device temperature (RDT). This step involves subtracting the virtual ambient temperature (VAT) from a measured temperature of the device (DTM). The relative device temperature (RDT) represents the temperature of the device relative to the ambient temperature.

It may be calculated as:

$$RDT = DTM - VAT$$

FIG. 4 illustrates different temperature profiles over time for an exemplary device, showing three distinct curves: the absolute temperature of the device (curve 202, corresponding to Device Temperature Measurement (DTM)), the relative device temperature (RDT, curve 401), and the curve 402 obtained by direct subtraction of the ambient temperature from the absolute temperature of the device. The x-axis represents time in seconds, while the y-axis on the left represents absolute temperature (DTM) in degrees Celsius, and the y-axis on the right represents relative temperature (RDT) in degrees Celsius.

Curve 202 represents the absolute temperature (DTM) of the exemplary device, which fluctuates over time. This curve shows the actual measured temperature of the device.

Curve 401 represents the Relative Device Temperature (RDT), calculated by subtracting the virtual ambient temperature (VAT) from the absolute temperature (DTM). This curve isolates the temperature increase due to the device's operation, removing the influence of ambient temperature variations. The relative temperature RDT remains relatively stable, indicating that it accurately reflects the device's operational heating.

In comparison, curve 402 represents the direct calculation of the relative temperature by subtracting the real ambient temperature from the absolute device temperature (DTM). This method does not account for the thermal inertia of the device, leading to more significant fluctuations and less accurate representation of the device's operational heating.

Thus, FIG. 4 demonstrates the effectiveness of using the virtual ambient temperature (VAT) to calculate the relative device temperature RDT of curve 401, which shows a more stable and accurate representation of the device's operational heating compared to curve 402 (direct calculation), which fluctuates more due to not accounting for the device's thermal inertia.

Referring back to FIG. 1, at step S3, the method calculates an additional temperature variation (DTVA) due to the device's operation. This step involves comparing the relative device temperature (RDT) to a theoretical neutral temperature variation (DTVN), which is determined by applying the model of the virtual ambient temperature to a previous relative device temperature. The additional temperature variation (DTVA) represents the temperature increase due to the device's operation.

Step S3 hence involves calculating the energy produced by the operation of the device, which is represented by the additional temperature variation (DTVA). FIG. 5 illustrates this calculation by comparing the relative device temperature (RDT 401) to the theoretical neutral temperature variation (DTVN 501). The RDT, shown as the crossed point 401, represents the temperature increase of the device due to its operation, relative to the virtual ambient temperature (VAT). The DTVN, shown as the blank point 501, represents the expected temperature variation of the device if no additional energy were produced by its operation, essentially reflecting the device's natural cooling trend. To determine the DTVN, the model of the virtual ambient temperature (VAT) is applied to the previous relative device temperature (P_RDT). This calculation accounts for the device's thermal inertia and provides a baseline for the device's temperature behavior in the absence of operational heating.

The DTVN is calculated using the following formula:

$$DTVN = P\_RDT \times (1 - A)$$

Where P_RDT is the previous relative device temperature, representing the device's temperature relative to the virtual ambient temperature at the previous time step, and A is a parameter of the first-order transfer function that accounts for the thermal inertia of the device. It represents the weighting factor applied to the previous virtual ambient temperature (P_VAT) and it is calculated as $A = \frac{Filt}{Filt + Cycle\_Time}$.

The DTVA, indicated by the arrow 502, is calculated by subtracting the DTVN from the RDT: DTVA=RDT-DTVN. This difference represents the additional temperature increase due to the device's operation, isolating the effect of the device's activity from other temperature influences. By accurately determining the DTVA, the method can effectively monitor and predict the device's operational heating, facilitating more precise predictive maintenance.

At step S4, the method involves creating a digital twin of the device. This step includes recording operational data of the device and training the created digital twin with the recorded data. During this step, all the process data which may influence any increase in the device temperature (speed, torque, current, pressure, load, etc.) and the energy produced by the device's operation (DTVA) are recorded as data to be predicted. Depending on the type of the device, other operational data may of course be considered, such as vibration levels, acoustic emissions, voltage, power consumption, lubrication levels, humidity, strain... The digital twin is a virtual representation of the device that can simulate the behavior of the device under various operating conditions. It will allow predicting the temperature increase which is solely due to the operation of the device.

According to an embodiment, the digital twin may be trained using machine learning algorithms to improve the accuracy of temperature predictions. By employing machine learning algorithms, the digital twin can learn from historical operational data and continuously improve its predictive capabilities. This results in more accurate modeling of the device's thermal behavior under various operating conditions, leading to better identification of potential anomalies and more effective predictive maintenance. Consequently, this approach reduces the likelihood of false alarms and missed detections, ensuring timely and appropriate maintenance actions.

At step S5, the method uses the trained digital twin to predict the temperature increase due to the device's operation. This step involves using the digital twin to predict the relative predicted temperature (RPT) based on at least some of the device's operational data.

This phase allows for determining the expected temperature increase due to the device's operation, which is then used to predict the absolute temperature of the device. FIG. 6 illustrates the process of calculating the predicted relative temperature (RPT 601) of the device using the expected temperature dissipation (ETD 603) and the additional predicted temperature (APT_DT 604) provided by the digital twin.

The RPT 601 is calculated by adding the ETD 603 to the APT_DT 604. The ETD 603 represents the expected temperature dissipation of the device in the absence of any operational heating, essentially reflecting the device's natural cooling trend. It is calculated using the previous relative predicted temperature (P_RPT 602) and the parameter A from the first-order transfer function, which accounts for the thermal inertia of the device. The formula for ETD 603 is:

$$ETD = P\_RPT \times (1 - A)$$

where:

*P_RPT* is the previous relative predicted temperature, representing the device's temperature relative to the virtual ambient temperature at the previous time step, and

*A* is a parameter of the first-order transfer function that accounts for the thermal inertia of the device.

The APT_DT, shown as the arrow 604 in FIG. 6, represents the additional predicted temperature increase due to the device's operation, as calculated by the digital twin. This value is derived from the operational data of the device, such as rotation speed, torque, current, pressure, and load, which are used to run the digital twin.

By adding the ETD and the APT_DT, the RPT is obtained, which represents the predicted relative temperature of the device. The formula for RPT is:

$$RPT = ETD + APT\_DT$$

FIG. 6 shows the RPT as the crossed point 601, the ETD as the blank point 603, and the P_RPT as the black point 602. The RPT provides a more accurate prediction of the device's temperature increase due to its operation, considering both the natural cooling trend and the additional heating from the device's activity.

Once the RPT is calculated, the absolute predicted temperature (Abs_PT) of the device can be determined by adding the virtual ambient temperature (VAT) to the RPT. This step ensures that the predicted temperature reflects both the ambient conditions and the operational heating of the device. The formula for Abs_PT is:

$$Abs\_PT = RPT + VAT$$

By accurately predicting the absolute temperature of the device, the method enables effective monitoring and detection of potential anomalies, facilitating proactive maintenance and preventing device failures. Of course, the virtual ambient temperature (VAT) may be updated in real-time based on current ambient temperature measurements. Hence, the temperature predictions and subsequent maintenance decisions are based on the most up-to-date environmental conditions. This real-time updating allows the system to dynamically adjust to changes in ambient temperature, providing a more precise calculation of the relative device temperature (RDT) and the additional temperature variation (DTVA) due to the device's operation.

Referring back to FIG. 1, at step S6, the method detects abnormal temperatures of the device by comparing the absolute predicted temperature to an actual measured temperature of the device. This step involves identifying a deviation that exceeds a predefined threshold, indicating an abnormal temperature and potential fault in the device. By comparing the absolute predicted temperature (Abs_PT), which accounts for both the ambient conditions and the operational heating of the device, to the actual measured temperature (DTM), the method can effectively identify discrepancies that signal potential issues. When the difference between the predicted (Abs_PT) and actual (DTM) temperatures surpasses the threshold, an alert is generated, enabling timely intervention and maintenance to prevent device failures and ensure optimal performance.

The threshold may be adjusted depending on the device, on its type and on the criticality of the process in which it is involved, and may vary from a few hundredths of a degree Celsius to a few degrees Celsius.

When an abnormal temperature is detected, an alert or notification may be generated and transmitted to a remote monitoring system or user interface. By providing real-time alerts and notifications, the responsiveness and efficiency of the maintenance process is enhanced. This allows for immediate attention to potential issues, reducing the risk of device failure and minimizing downtime. By transmitting these alerts to a remote monitoring system or user interface, the method ensures that maintenance personnel are promptly informed of any anomalies, enabling them to take corrective actions swiftly. This proactive approach to maintenance improves the overall reliability and performance of the device, leading to increased operational efficiency and reduced maintenance costs.

A user interface may also be provided for visualizing the device's temperature data and predictive maintenance insights, to enhance the accessibility and usability of the temperature monitoring and predictive maintenance system. By providing a user interface, the method allows maintenance personnel to easily visualize and interpret the device's temperature data and predictive maintenance insights. This facilitates better decision-making and more efficient maintenance planning. The user interface can present real-time data, historical trends, and predictive analytics in a clear and intuitive manner, enabling users to quickly identify potential issues and take appropriate actions. This improved visibility and understanding of the device's condition contribute to more effective maintenance strategies, reducing the likelihood of unexpected failures and optimizing the overall performance and lifespan of the device.

The digital twin created at step S4 may be periodically updated with new operational data to improve the accuracy of temperature predictions over time. Hence, the method ensures that the digital twin remains current and reflective of the device's actual operating conditions. This ongoing update process allows the digital twin to learn from the latest data, refining its predictive models and algorithms to better account for any changes or trends in the device's behavior or environmental conditions, ensuring long-term reliability and robustness of the maintenance strategy.

FIG. 7 show a schematic diagram of a system for predictive maintenance 700 according to an embodiment. System 700 comprises several components that work together to monitor and predict the temperature of a device, ensuring effective maintenance and preventing potential failures.

Several temperature sensors 701 measure both the ambient temperature and the temperature of the device. These sensors play a role in collecting accurate temperature data, which is for creating the virtual ambient temperature (VAT) and calculating the relative device temperature (RDT). The temperature sensors 701 can be implemented using various types of sensors, such as thermocouples, resistance temperature detectors (RTDs), or infrared sensors, depending on the requirements of the application and the operating environment of the device.

One or several other sensor(s) 702 measure operational data of the device, such as rotation speed, torque, current, pressure, or load. This data is necessary for understanding the device's operating conditions and for training the digital twin to predict temperature increases due to the device's operation. The sensor 702 can be implemented using various types of sensors, such as accelerometers, strain gauges, current sensors, or pressure transducers, depending on the specific parameters being monitored.

The data acquisition unit 703 records a set of ambient temperatures and corresponding device temperatures when the device is not in operation, as well as operational data of the device when the device is in operation. This unit ensures that relevant data is collected and stored for further processing and analysis. The data acquisition unit 703 can be implemented using data loggers, data acquisition systems (DAQs), or embedded systems with data storage capabilities. The data acquisition unit 703 interfaces with the temperature sensor(s) 701 and the sensor(s) 702 to gather and store the necessary data.

The memory 704 stores the recorded data and the models used for creating the virtual ambient temperature (VAT) and the digital twin. This memory ensures that all data and models are readily available for processing and analysis. The memory 704 may include any computer-readable medium known in the art including, for example, volatile memory, such as static random access memory (SRAM) and dynamic random access memory (DRAM), and/or non-volatile memory, such as read-only memory (ROM, erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules. The memory 704 provides sufficient storage capacity to accommodate the large volumes of data generated by the sensors and the data acquisition unit 703.

The processing unit 705 creates the model that reproduces the variation of the device temperature based solely on the ambient temperature, calculates the relative device temperature (RDT), and determines the additional temperature variation (DTVA) due to the device's operation. The processing unit 705 also trains the digital twin with the recorded operational data and uses the trained digital twin to predict the temperature increase due to the device's operation. The processing unit 705 can be implemented as one or more microprocessors, microcomputers, microcontrollers, digital signal processors, central processing units, state machines, logic circuitries, and/or any devices that manipulate signals based on operational instructions. The processing unit 705 can be a single processing unit or a number of units, all of which could also include multiple computing units. Among other capabilities, the processor(s) are configured to fetch and execute computer-readable instructions stored in the memory. The processing unit 705 performs complex calculations and data processing tasks to ensure accurate temperature monitoring and prediction.

The functions realized by the processing unit 705 may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The communication module 706 transmits the detected abnormal temperature and associated data to a remote monitoring system or alerts the user. This module ensures that maintenance personnel are promptly informed of any potential issues, enabling timely intervention and maintenance actions. The communication module 706 can be implemented using various communication technologies, such as wireless communication (Wi-Fi, Bluetooth, Zigbee), wired communication (Ethernet, RS-485), or cellular communication (4G, 5G). The communication module 706 provides reliable and secure data transmission to remote monitoring systems or user interfaces.

The interface unit 707 provides a user interface for visualizing the device's temperature data and predictive maintenance insights. This unit enhances the accessibility and usability of the temperature monitoring and predictive maintenance system, allowing maintenance personnel to easily interpret the data and make informed decisions. The interface unit 707 can be implemented using graphical user interfaces (GUIs) on computers, tablets, or smartphones, or using dedicated display panels. The interface unit 707 presents real-time data, historical trends, and predictive analytics in a clear and intuitive manner, facilitating efficient maintenance planning and decision-making.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disk and magnetic tapes, hard drives, or optically readable digital data storage media.

## Claims

1. Method for predictive maintenance of a device based on temperature monitoring, the method comprising:

    a. creating (P1) a digital twin of the device by:

        i. determining (S1) a virtual ambient temperature, VAT, comprising:

            1. recording a set of ambient temperatures and a corresponding set of device temperatures when the device is not in operation,
            2. based on said sets of recorded temperatures, creating a model that reproduces the variation of the device temperature based solely on the ambient temperature, said model outputting the virtual ambient temperature, VAT,

        ii. calculating (S2) a relative device temperature, RDT, by subtracting the virtual ambient temperature, VAT, from a measured temperature of the device,
        iii. calculating (S3) an additional temperature variation, DTVA, due to the device's operation by comparing the relative device temperature, RDT, to a theoretical neutral temperature variation, DTVN, which is determined by applying the model of the virtual ambient temperature to a previous relative device temperature,
        iv. recording (S4) operational data of the device, and training said created digital twin with said recorded data,

    b. using (P2) the created digital twin to predict the temperature increase due to the device's operation, APT_DT, based on at least some of its operational data, and, based on the predicted temperature increase, APT_DT, calculating a predicted relative temperature of the device, RPT,
    c. predicting (S5) the absolute temperature of the device, Abs_PT, by adding the virtual ambient temperature, VAT, to the predicted relative temperature, RPT,
    d. detecting (S6) an abnormal temperature by comparing the predicted absolute temperature, Abs_PT, to an actual measured temperature of the device and identifying a deviation that exceeds a predefined threshold.

2. The method according to claim 1, wherein the model that reproduces the variation of the device temperature based solely on the ambient temperature is a first-order transfer function.

3. The method of claim 2, wherein said first-order transfer function takes account of an offset due to temperature sensors (701) used for recording said sets of ambient and device temperatures.

4. The method of claim 2 or 3, wherein parameters of the first-order transfer function are determined using a method belonging to the group comprising:

    - a method of Least Squares;
    - a Maximum Likelihood Estimation method;

- a Gradient Descent algorithm;
- a genetic algorithm;
- an Expectation-Maximization algorithm.

5. The method of any of claims 1 to 4, wherein the set of ambient temperatures recorded for creating said digital twin spans a smaller range of ambient temperatures than the full temperature range in which the device may operate.

6. The method of any of claims 1 to 5, wherein the operational data of the device includes at least one of rotation speed, torque, current, pressure, or load.

7. The method according to any of claims 1 to 6, wherein the virtual ambient temperature, VAT (301), is updated in real-time based on current ambient temperature measurements.

8. The method according to any of claims 1 to 7, wherein the digital twin is trained using machine learning algorithms to improve the accuracy of temperature predictions.

9. The method according to any of claims 1 to 8, wherein the method further comprises generating alerts or notifications when an abnormal temperature is detected, and transmitting these alerts to a remote monitoring system or user interface (707).

10. The method according to any of claims 1 to 9, wherein the method further comprises providing a user interface (707) for visualizing the device's temperature data and predictive maintenance insights.

11. The method according to any of claims 1 to 10, wherein the digital twin is periodically updated with new operational data to improve the accuracy of temperature predictions over time.

12. A system (700) for predictive maintenance of a device based on temperature monitoring, the system comprising:

    a. at least two temperature sensors (701) respectively configured to measure an ambient temperature and a temperature of the device;
    b. at least one sensor (702) configured to measure operational data of the device;
    c. a data acquisition unit (703) configured to record a set of ambient temperatures and a corresponding set of device temperatures when the device is not in operation and to record operational data of the device when the device is in operation;
    d. a processing unit (705) configured to:

        i. create a model that reproduces the variation of the device temperature based solely on the ambient temperature, said model being fed with the data recorded by the data acquisition unit and outputting a virtual ambient temperature, VAT;
        ii. calculate a relative device temperature, RDT, by subtracting the virtual ambient temperature, VAT, from a temperature of the device measured by said at least one temperature sensor;
        iii. calculate an additional temperature variation, DTVA, due to the device's operation by comparing the relative device temperature, RDT, to a theoretical neutral temperature variation, DTVN, which is determined by applying the model of the virtual ambient temperature to a previous relative device temperature;
        iv. train a digital twin of the device with said recorded operational data of the device and said calculated DTVA;
        v. use the trained digital twin to predict the temperature increase due to the device's operation, APT_DT, based on at least some of its measured operational data and, based on the predicted temperature increase, APT_DT, calculate a predicted relative temperature of the device, RPT;
        vi. predict the absolute temperature of the device, Abs_PT, by adding the virtual ambient temperature, VAT, to the predicted relative temperature, RPT;
        vii. detect an abnormal temperature by comparing the predicted absolute temperature to an actual measured temperature of the device and identifying a deviation that exceeds a predefined threshold;

    e. a communication module (706) configured to transmit the detected abnormal temperature and associated data to a remote monitoring system or alert the user.

13. The system of claim 12, wherein the processing unit (705) is configured to implement the method for predictive maintenance of a device based on temperature monitoring according to any of claims 1 to 11.

**14.** A computer program product comprising a computer-readable medium having instructions stored thereon, which when executed by a processor, cause the processor to perform a method for predictive maintenance of a device based on temperature monitoring according to any of claims 1 to 11.

**15.** A non-transitory computer-readable medium having software recorded thereon, the software being executable by a processor to perform a method for predictive maintenance of a device based on temperature monitoring, the method comprising the steps as defined in any of claims 1 to 11.

Ambiante_Temperature (Temp_Amb) →  | Virtual_Ambiant_Temperature<br>VAT | ∿ S1 | ⎤
| Device temperature measurement (DTM) → | Relative_Device_Temperature<br>RDT | ∿ S2 | CREATION<br>PHASE –P1
| | Device_Temperature_Variation_Addition<br>DTVA | ∿ S3 |
| Process data<br>(speed, current, torque, etc.) → | Digital twin creation<br>Relative_Predict_Temperature<br>RPT | ∿ S4 | ⎦
| Process data<br>(speed, current, torque, etc.) → | Digital twin prediction<br>Absolue_Predict_Temperature<br>Abs_PT | ∿ S5 | PREDICTION<br>PHASE – P2
| Device temperature measurement (DTM) → | Fault detection | ∿ S6 |

**FIG. 1**

Ambiant temperature (201)          ······ Absolute temperature (202)

**FIG. 2**

Virtual temperature for device (VAT)

FIG. 3

Device temperature

FIG. 4

FIG. 5

FIG. 6

FIG. 7

Europäisches
Patentamt

European
Patent Office

Office européen
des brevets

# EUROPEAN SEARCH REPORT

**Application Number**

EP 24 30 6969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/344296 A1 (OBST RAPHAEL SIMON [DE] ET AL) 4 November 2021 (2021-11-04) * paragraphs [0008], [0021], [0023] * | 1-15 | INV. H02P29/60 G05B23/02 |

TECHNICAL FIELDS
SEARCHED (IPC)

G05B
H02P

The present search report has been drawn up for all claims

| Place of search | Date of completion of the search | Examiner |
|---|---|---|
| Munich | 24 April 2025 | Heiner, Christoph |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

                                
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 30 6969

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2025

| Patent document cited in search report | Publication date | Patent family member(s) | Publication date |
|---|---|---|---|
| US 2021344296 A1 | 04-11-2021 | BR 112021005681 A2 | 22-06-2021 |
| | | CN 113169700 A | 23-07-2021 |
| | | DE 102018217429 A1 | 16-04-2020 |
| | | EP 3844867 A1 | 07-07-2021 |
| | | JP 2022503981 A | 12-01-2022 |
| | | US 2021344296 A1 | 04-11-2021 |
| | | WO 2020074048 A1 | 16-04-2020 |

EPO FORM P0459

For more details about this annex : see Official Journal of the European Patent Office, No. 12/82